# EUROPEAN PATENT SPECIFICATION

(11) **EP 1 825 964 B1**
(45) Date of publication and mention of the grant of the patent: **21.12.2011**
(21) Application number: 07003661.1
(22) Date of filing: 22.02.2007
(51) Int. Cl.: B25F 5/00

(54) **Electric power tool**
Elektrisches Werkzeug
Outil d'alimentation électrique

(30) Priority: 23.02.2006 JP 2006047489
(43) Date of publication of application: 29.08.2007
(73) Proprietor: Panasonic Electric Works Co., Ltd., Kadoma-shi Osaka (JP)
(72) Inventor: Arimura, Tadashi, Kadoma-shi, Osaka (JP); Tanaka, Naotake, Kadoma-shi, Osaka (JP); Sekino, Fumiaki, Kadoma-shi, Osaka (JP)
(74) Representative: Samson & Partner

(56) References cited:
- GB-A- 2 387 050
- JP-U- 5 026 278
- US-A- 5 903 423

## Description

The present invention relates to an electric power tool according to the preamble of claim 1.

Such an electric power tool is known from GB-2 387 050 A.

Conventionally, there is known an electric power tools including a motor; a battery unit for supplying an electric power for driving the motor; a driving force transmission mechanism for transmitting a driving force of the motor; a manipulation unit for receiving input data including an on/off manipulation and a rotation number of the motor inputted; and a motor control unit for controlling the motor based on the input data from the manipulation unit.

As the above-mentioned battery unit, a Ni-Cd battery and a Ni-MH battery have been widely used. However, a Li ion battery, which is light in weight and large in capacity, is winning popularity in recent years. In comparison with the conventional Ni-Cd and Ni-MH storage batteries, the Li ion battery tends to suffer a greater reduction in life if its temperature becomes high. Further, especially when the Li ion battery is used for an electric power tool, the temperature of the battery unit may be affected by the environmental temperature when used outdoors, or a self-heating due to a high current. Therefore, the temperature of the battery unit needs to be monitored.

However, as for a conventionally known mechanism for controlling a motor by monitoring a battery state, there is merely disclosed a system of stopping a power supply to the motor when detecting a voltage reduction of a battery unit (refer to Japanese Utility Laid-open Publication No. H5-26278).

It is, therefore, an object of the present invention to provide an electric power tool capable of preventing a reduction of a battery life, caused by an influence of an environmental temperature or a self heating due to a high current, by monitoring a temperature of a battery unit to control the motor.

This object will be achieved with an electric powers tool comprising the features of claim 1.

With this configuration, the rotation of the motor is stopped or suppressed automatically when the temperature of the battery unit is increased by an environmental temperature of, e.g., an outdoor circumstance or a self-heating due to a high current. Thus, a reduction in a battery life, caused by a further increase of the temperature of the battery unit, can be prevented.

Furthermore, since it is determined whether or not the battery unit is in the abnormal state while the manipulation unit is being manipulated by an operator, the operator is guaranteed to be informed of the conversion of the operation mode by the stoppage or suppression of the rotation of the motor.

It is preferable that the motor control unit determines that the battery unit is in an abnormal state also in case the temperature value detected by the temperature sensor while being operated in the normal operation mode is lower than the second abnormal temperature value but higher than or equal to a second abnormal temperature value, and an increase rate of the temperature value is higher than or equal to a specific rate.

In this manner, even if the temperature sensor 8 cannot keep up with a rapid temperature increase, the operation mode of the motor can be ensured to be converted to the limited operation mode before the temperature of the battery unit becomes excessively high to thereby deteriorate the battery life. Besides, this effect can be realized without using an expensive device such as a high-density sensor.

Further, it is preferable that the motor control unit sets a maximum rotation number of the motor while being operated in the limited operation mode to be smaller than that of the motor while being operated in the normal operation mode.

With this configuration, the temperature rise in the battery unit can be easily prevented, and the operator is guaranteed to be informed of the conversion from the normal operation mode to the limited operation mode.

Further, it is preferable that, if the temperature value detected by the temperature detector while being operated in the limited operation mode is equal to or smaller than a restoration temperature value, the motor control unit determines to return the operation to the normal operation mode, and converts the operation mode of the motor to the normal operation mode.

With this configuration, the normal operation mode can be performed without any additional work by the operator such as a set-up manipulation.

Further, it is preferable that the motor control unit carries out a determination to return the operation to the normal operation mode only while the manipulation unit is not being manipulated.

With this configuration, safety can be secured by preventing a dangerous situation in which the rotation number ω of the motor increases rapidly during the rotation.

Further, it is preferable that, when the manipulation unit is manipulated first after a determination to return the operation to the normal operation mode, the motor control unit executes a restoring operation mode, and converts the operation mode of the motor to the normal operation mode after completing the restoring operation mode, and wherein, in the restoring operation mode, a time period required for the rotation number of the motor to reach a number corresponding to the input data of the manipulation unit is set to be longer than that set in the normal operation mode.

With this configuration, the operator can be informed of an end of the limited operation mode when the first manipulation is processed as the restoring operation mode, during which the rotation number ω of the motor is increased gradually. Thus, safety can be enhanced.

Further, it is preferable that the electric power tool further includes a load detector for detecting a load of the motor, wherein the motor control unit stops the motor if a load value detected by the load detector while being operated in the limited operation mode exceeds a specific reference value for a specific period of time.

It is highly possible that an output shaft or the like may be locked during the limited operation mode. However, with the configuration described above, a temperature rise in the battery unit or the motor and a resultant failure caused thereby can be prevented by setting up the motor to be stopped when it is locked.

Further, it is preferable that the electric power tool further includes a power supply sustaining unit that serves to sustain or cut off a power supply to the motor control unit, wherein, if the manipulation unit is not manipulated for a specific time period, the power supply sustaining unit cuts off the power supply to the motor control unit, the specific time period being set to be longer while being operated in the limited operation mode than that set while being operated in the normal operation mode.

In this manner, a discharge path can be cut off by the power supply sustaining unit to thereby prevent a deterioration in the battery life when using the electric power tool for a long time. Further, since the specific time period required for cutting off the power supply to the motor control unit is set to be longer during the limited operation mode, a display for indicating the abnormal state can be continued to operate for a while.

Further, it is preferable that a transmission failure temperature value is set such that, when a transmission failure occurs in a data transmission line connected between the temperature sensor and the motor control unit, the temperature value detected by the temperature sensor is smaller than the transmission failure temperature value, and wherein, if the temperature value detected by the temperature detector while being operated in the normal operation mode is equal to or smaller than the transmission failure temperature value, the motor control unit determines that the battery unit is in the abnormal state, and converts the operation mode of the motor to the limited operation mode regardless of the input data provided from the manipulation unit.

The abnormal state may not be detected even when the temperature of the battery unit is significantly high, if the motor control unit receives an incorrect temperature value lower than an actual temperature due to a contact failure of the data transmission line, thereby continuing the operation in the normal operation mode. However, with the configuration described above, the operation mode of the motor is converted to the limited operation mode when the temperature value is unreliable. Thus, the battery unit can be protected from the temperature rise.

Further, the above-described configurations can be combined with one another as long as the combination does not depart from the scope of the present invention.

In accordance with the embodiment of the present invention, by controlling the motor through monitoring the temperature of the battery unit, it is possible to prevent a reduction in a battery life due to an influence of an environmental temperature or a self-heating by a high current.

The above and other objects and features of the present invention will become apparent from the following description of embodiments given in conjunction with the accompanying drawings, in which:
Fig. 1 is a schematic block diagram of an electric power tool in accordance with a first embodiment of the present invention;
Fig. 2 sets forth a schematic configuration view of the electric power tool shown in Fig. 1;
Fig. 3 provides a graph showing a relationship between a manipulation amount of a manipulation unit and a rotation number of a motor while being operated in a normal operation mode of the electric power tool shown in Fig. 1;
Fig. 4 presents a timing diagram describing conversions of an operation mode depending on a temperature value of the electric power tool shown in Fig. 1;
Fig. 5 depicts a flowchart to explain the conversions of the operation mode;

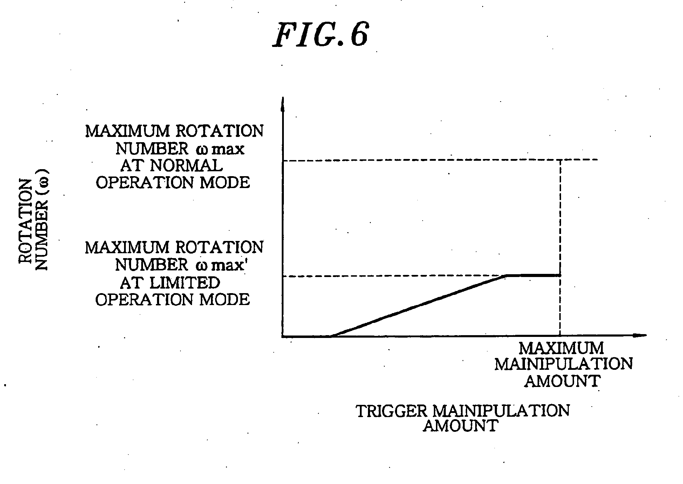

Fig. 6 is a graph showing a relationship between a manipulation amount of the manipulation unit and a rotation number of the motor while being operated in a limited operation mode of the electric power tool shown in Fig. 1;
Fig. 7 offers timing diagrams describing a restoring operation mode of an electric power tool in accordance with a second embodiment of the present invention;
Figs. 8A and 8B present flowcharts to explain conversions of the operation mode of the electric power tool in accordance with the second embodiment of the present invention;
Fig. 9 sets forth a schematic block diagram of an electric power tool in accordance with a third embodiment of the present invention; and
Figs. 10A to 10C provide flowcharts to explain conversions of the operation mode of the electric power tool in accordance with the third embodiment of the present invention.

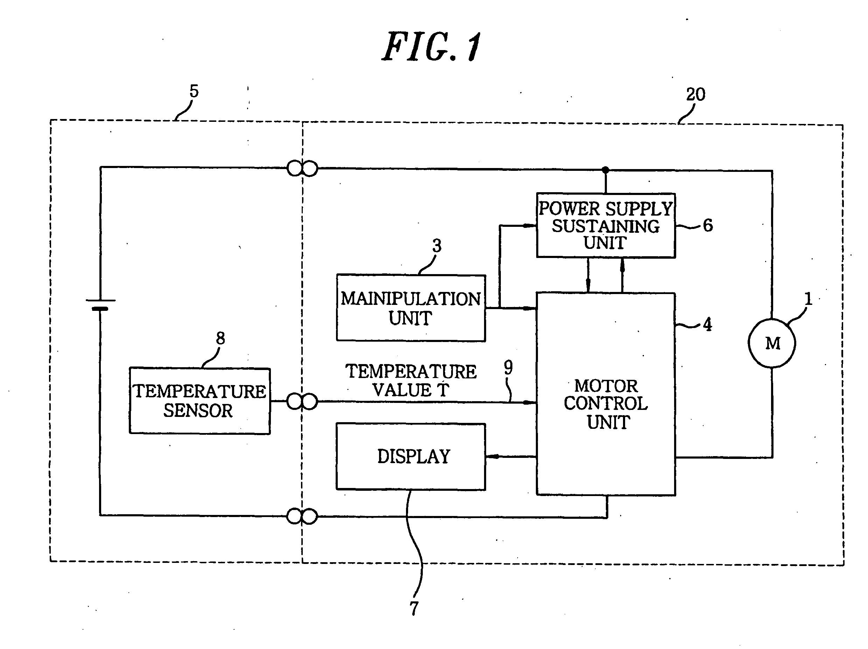

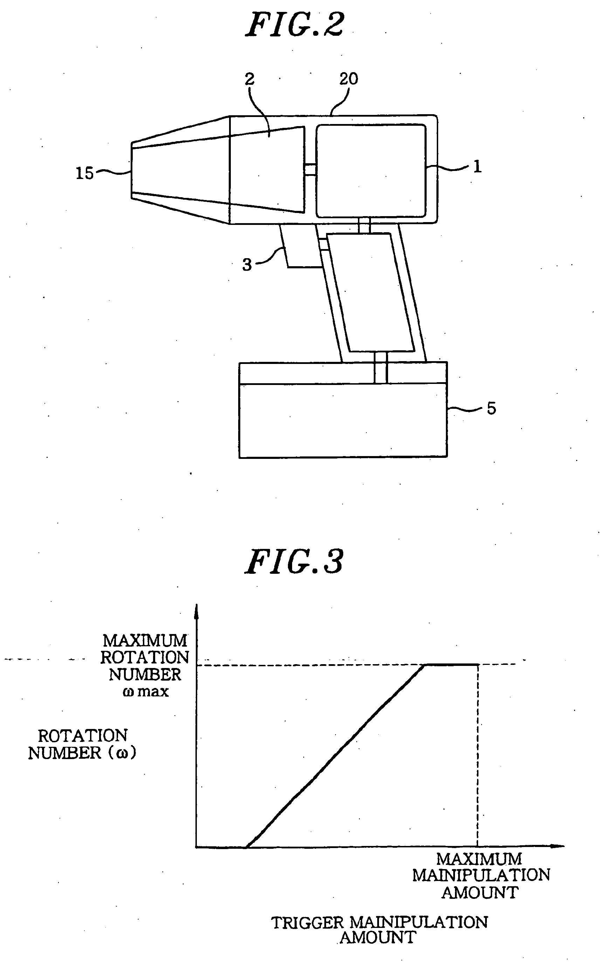

Hereinafter, embodiments of the present invention will be described with reference to the accompanying drawings. Figs. 1 and 2 illustrate schematic configurations of an electric power tool in accordance with a first embodiment of the present invention. The electric power tool includes, in a main body 20 thereof, a motor 1; a driving force transmission mechanism 2 for transmitting a rotational driving force of the motor 1; and a motor control unit 4 for controlling a power supply to the motor 1.

The driving force transfer mechanism 2 is, for example, a screw-fastening mechanism configured with, e.g., a speed reducer with a torque limiting function or an impact generating function for generating a rotary power by repeatedly throwing a hammer to an anvil. The driving force transmission mechanism 2 transmits the rotational driving force of the motor 1 to an output shaft 15 located at a leading end of the main body 20.

A manipulation unit 3 that is, for example, a trigger switch is protrudingly installed at a front side of the main body 20 in a manner that it can be freely pushed in and out. Data on a pushed amount of the manipulation unit 3 is inputted to the motor control unit 4, and the control unit 4 estimates a rotation number and an on/off operation of the motor 1 based on the input data. Further, detachably connected to a lower end portion of the main body 20 is a battery unit 5 configured with a Li ion battery pack for supplying an electric power to the motor 1 via the motor control unit 4 to thereby drive the motor 1. The main body 20 is also equipped with a power supply sustaining unit 6 serving to sustain or cut off a power supply to the motor control unit 4; and a display 7 for showing a state of the battery unit 5.

The battery unit 5 in the electric power tool of the present embodiment includes therein a temperature sensor 8 which serves to detect an internal temperature of the battery unit 5. While the battery unit 5 is attached to the main body 20, a temperature value T detected by the temperature sensor 8 is inputted to the motor control unit 4 via a data transmission line 9. The motor control unit 4 converts an operation mode of the motor 1 based on the detection result of the temperature sensor 8.

In an operation mode of a normal operation (hereinafter referred to as "normal operation mode"), the motor control unit 4 turns on a power supply to the motor 1 at a time when a manipulation amount (i.e., a pushed amount) of the manipulation unit 3 exceeds a specific amount. Then, the motor control unit 4 controls the power supply to the motor 1 such that the motor 1 is rotated as many times as a rotation number ω, which is in proportion to an increase in the manipulation amount accumulated after the power supply to the motor 1 is turned on.

Further, as shown in Fig. 3, a maximum rotation number ωmax of the motor 1 is set such that the rotation number ω of the motor 1 reaches the maximum rotation number ωmax before the manipulation amount reaches a maximum amount. Once the rotation number ω reaches the maximum rotation number ωmax, the rotation number ω is regulated to be kept at a constant value thereafter even if the manipulation amount is further increased. When the manipulation unit 3 is released and the manipulation amount falls below a specified amount, the power supply to the motor 1 is turned off.

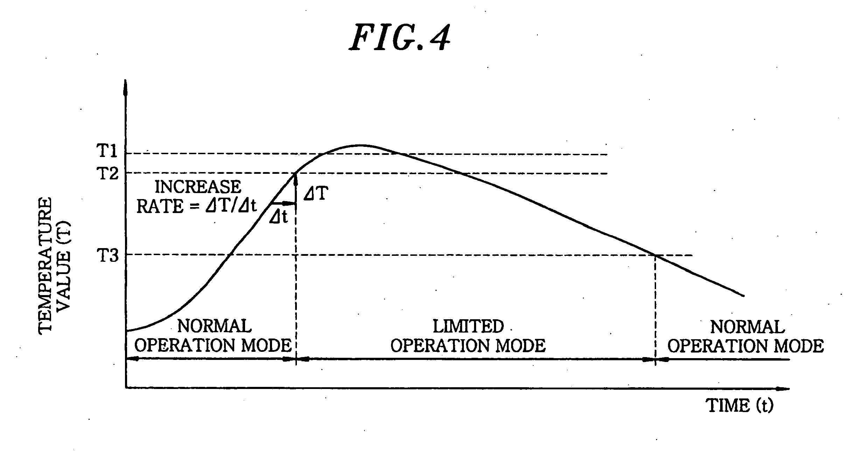

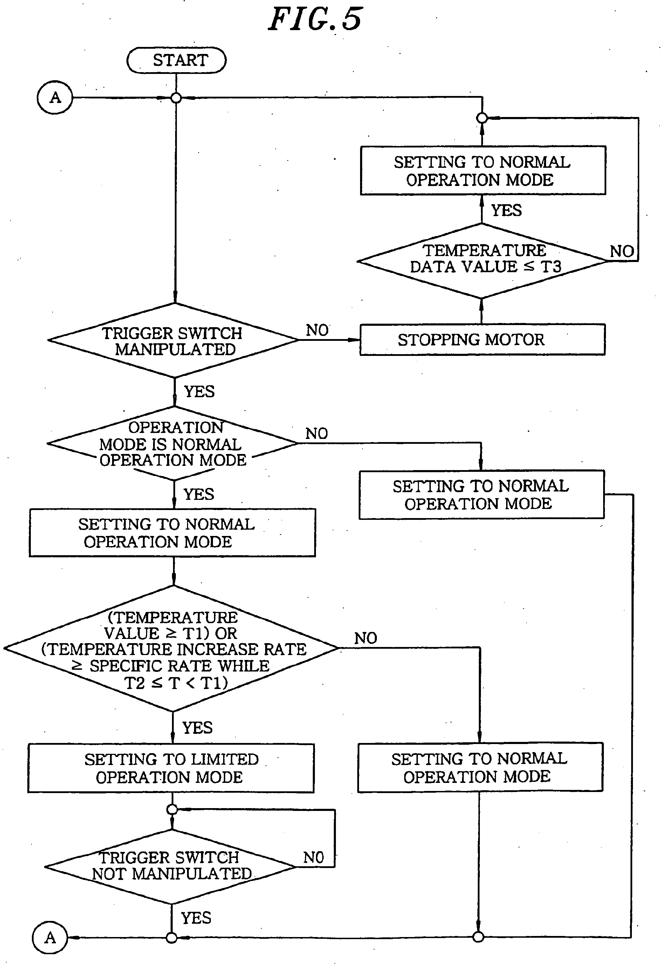

Figs. 4 and 5 describe an operation control for appropriately converting the operation mode of the motor 1 based on the temperature value T of the battery unit 5 detected by the temperature sensor 8. As shown therein, by using a first and a second abnormal temperature value T1 and T2 (T2 < T1) previously set for a detection of an abnormal state of battery temperature, the motor control unit 4 determines whether or not the battery unit 5 is in an abnormal state of temperature during a normal operation mode due to an influence of an environmental temperature or a self-heating.

Then, when the battery unit 5 is determined to be in the abnormal state, the normal operation mode is automatically converted to a limited operation mode during which the rotation number ω of the motor 1 is limited. During the limited operation mode, the motor control unit 4 determines whether or not to return the operation to the normal operation mode by using a restoration temperature value T3 (T3 < T2) that is set previously.

Hereinafter, the determinations made by the motor control unit 4 will be explained in further detail. As shown in Fig. 5, in the normal operation mode during which the motor control unit 4 controls the power supply to the motor 1 based on the input data from the manipulation unit 3, the motor control unit 4 determines that the battery unit 5 is in the abnormal state if a temperature data valve T detected by the temperature sensor 8 is equal to or higher than the first abnormal temperature value T1 (condition 1); or if the temperature value T is lower than the first abnormal temperature value T1 but equal to or higher than the second abnormal temperature value T2, and an increase rate Δ*T*/Δ*t* of the temperature value T is equal to or higher than a specific rate, wherein the second abnormal temperature value T2 is lower than the first abnormal temperature value T1 (condition 2).

In the limited operation mode executed after the battery unit 5 is determined to be in the abnormal state, the motor 1 is compulsively stopped temporarily regardless of the input data provided from the manipulation unit 3, and the display 7, configured with an LED or the like, for indicating the abnormal state is turned on. Thereafter, the power supply to the motor 1 is controlled under a specific condition by which the rotation number ω of the motor 1 is limited.

Under this specific condition, the ratio of an increase in the rotation number ω to an increase of the manipulation amount is to be restrained, and a maximum rotation number ωmax' of the motor 1 while being operated in the limited operation mode is set to be smaller than the maximum rotation number ωmax of the motor 1 during the normal operation mode. Alternatively, the limited operation mode may be implemented by only one of the above-described two operations (i.e., either compulsively stopping the motor 1; or performing a power supply control under the specific condition).

If an improper high-load work is repeatedly carried out, the temperature in the battery unit 5 will increase rapidly. In this case, there will develop a discrepancy between the temperature value T detected by the temperature sensor 8 and an actual temperature in the battery unit 5, because the temperature sensor 8 fails to keep up with the rapid increase in temperature in the battery unit 5. However, by applying the condition 2 that has been introduced in addition to the condition 1, the operation mode of the motor 1 can be converted to the limited operation mode before the temperature in the battery unit 5 becomes excessively high as a result of the rapid increase in temperature. Further, it is also possible to use only the condition 1 as the condition for determining the abnormal state.

Further, the motor control unit 4 is configured such that the abnormal state determination is carried out only while the manipulation unit 3 is being manipulated. By performing the abnormal state determination only while the operator is manipulating the manipulation unit 3, the operator is guaranteed to be securely and safely informed of the conversion of the operation mode since the motor 1 is to be stopped or restrained by the condition. In contrast, if the operation mode is automatically converted while the operator is not manipulating the manipulation unit 3, the operator might continue to use the electric power tool believing that the electric power tool is in the normal operation mode without knowing the conversion of the operation mode to the limited operation mode, which would be troublesome.

In the limited operation mode, since the power supply to the motor 1 is stopped or suppressed, the temperature value T detected by the temperature sensor 8 decreases gradually as shown in Fig. 4. If the temperature value T detected during the limited operation mode falls below the restoration temperature value T3 set in advance, the motor control unit 4 determines to return the operation to the normal operation mode and converts the operation mode of the motor 1 back to the normal operation mode. Here, the determination of the return to the normal operation mode is performed only while the manipulation unit 3 is not being manipulated, since otherwise there might develop a safety related problem if the rotation number ω increases rapidly while the motor 1 is driven to be rotated.

In addition, in the present embodiment, the power supply sustaining unit 6 (shown in Fig. 1) sustains a power supply from the battery unit 5 to the motor control unit 4 under normal conditions, but cuts off the power supply to the motor control unit 4 if the manipulation unit 3 is not manipulated for a specific time period. Accordingly, a discharge path of the battery unit 5 is cut off to prevent a battery life reduction. If the manipulation unit 3 is manipulated after the power supply is cut off, the power supply sustaining unit 6 resumes the power supply to the motor control unit 4.

Here, the specific time period, which is required for cutting off the power supply to the motor control unit 4, is set to be longer in the limited operation mode than in the normal operation mode.

As described above, the abnormal state of the battery unit 5 is reported to the operator by the display 7 such as an LED under the control of the motor control unit 4. However, if the power supply to the motor control unit 4 is cut off before the temperature in the battery unit 5 is reduced sufficiently, the display is turned off. This may cause a problem in that the operator might continue to use the electric power tool believing that the electric power tool had been restored to the normal operation mode despite the fact that it was in the limited operation mode. Therefore, the specific time period in the limited operation mode is set to be long enough to allow the temperature of the battery unit 5 to decrease sufficiently for returning the operation to the normal operation mode.

Further, although not shown in Figs. 4 and 5, it is preferable to set in advance a transmission failure temperature value T4 (T4 < T3) such that, if a transmission failure occurs in the data transmission line 9 connected between the motor control unit 4 and the temperature sensor 8 due to a broken wire or a defective contact, the temperature value T incorrectly detected by the motor control unit 4 is lower than the transmission failure temperature value T4. In this configuration, when the temperature value T is observed to be smaller than the transmission failure temperature value T4 while being operated in the normal operation mode, the motor control unit 4 determines that the battery unit 5 is in the abnormal state, and converts the operation mode of the motor 1 to the limited operation mode.

This control mechanism prevents the motor control unit 4 from failing to detect the abnormal state in which the temperature of the battery unit 5 is very high and the motor 1 is maintaining to operate in the normal operation mode, in case the motor control unit 4 detects an incorrect temperature value T lower than an actual temperature due to the transmission failure. That is, in the present embodiment, when the temperature value T is unreliable, the abnormal state is detected by using the temperature value T4, and the operation mode is converted to the limited operation mode. Thus, a rise in the battery temperature can be suppressed and to thereby protect the battery unit 5. At this time, it is preferable to inform the operator by, e.g., turning on the display 7, that the battery temperature detected by the temperature sensor 8 is incorrect.

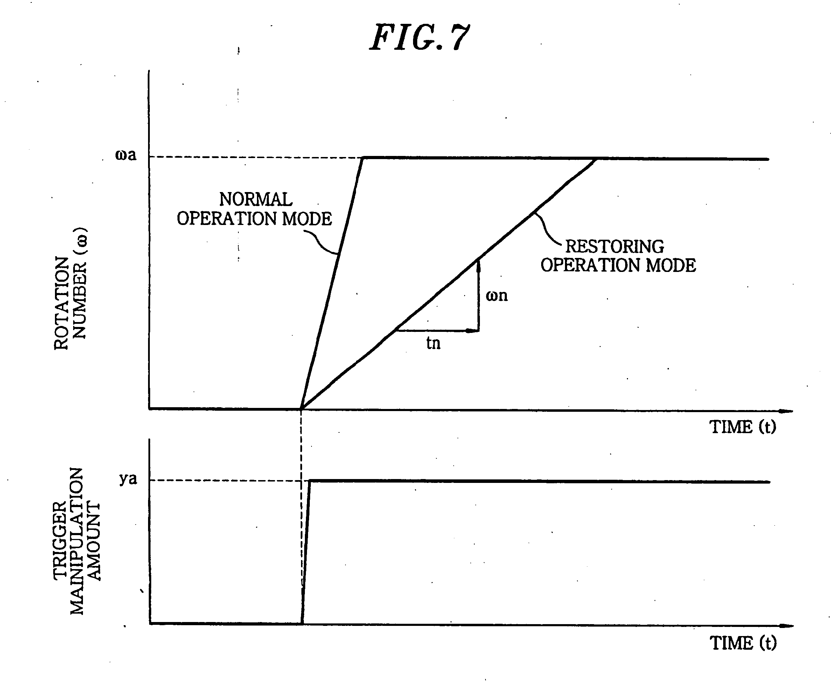

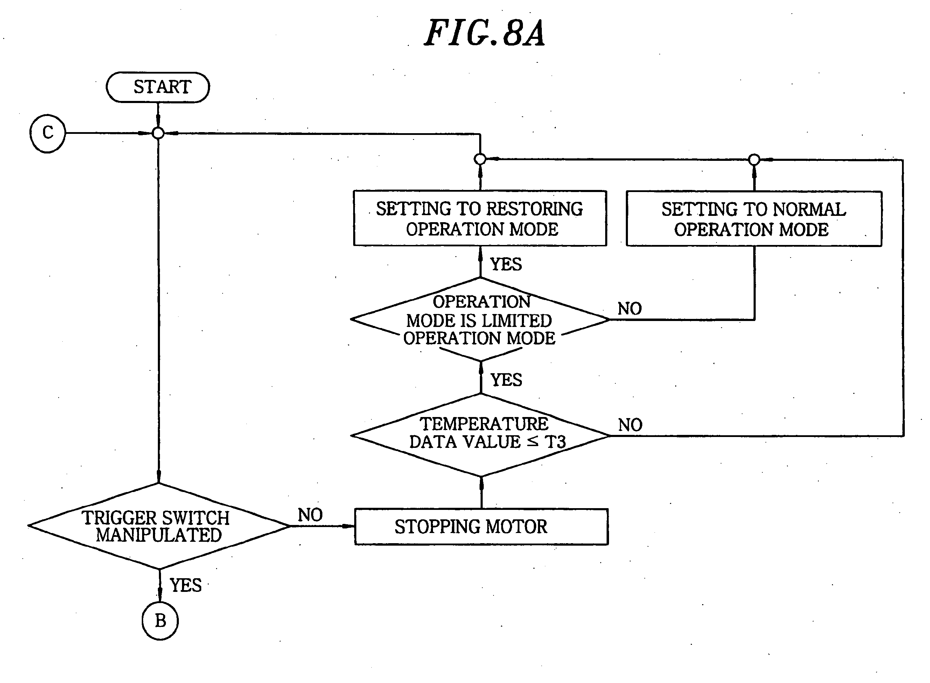

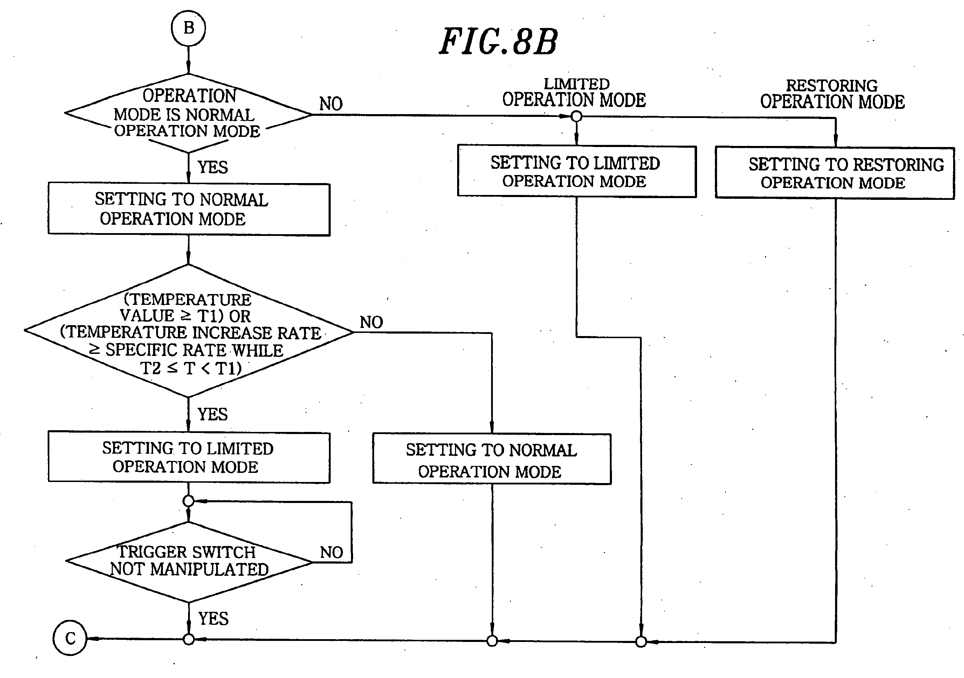

Hereinafter, an electric power tool in accordance with a second embodiment of the present invention will be explained with reference to Figs. 7 and 8. The electric power tool of the second embodiment has a configuration same as that of the first embodiment, except that another operation mode referred to as "restoring operation mode" is additionally used therein. Therefore, same parts will be given same reference numerals, respectively, and descriptions thereof will be omitted; and instead, distinctive parts will be focused and elaborated.

In the motor control unit 4 in accordance with the present embodiment, the motor 1 is controlled according to the restoring operation mode when the manipulation unit 3 is manipulated (i.e., pushed) first after the operation mode has been determined to be returned to the normal operation mode. Thereafter, from the subsequent manipulation immediately after the first one, the motor 1 is controlled according to the normal operation mode. In the restoring operation mode, a time period required for the rotation number ω of the motor 1 to reach a rotation number ωα that corresponds to the input data (i.e., the manipulation amount) of the manipulation unit 3 is set to be longer than that in the normal operation mode.

Without the restoration operation mode, a dangerously rapid increase in the rotation number ω might occur beyond the operator's expectations when the operator starts to use the electric power tool without knowing that the operation mode is being converted to the normal operation mode. However, in the present embodiment, the rotation number ω is set to increase slowly when the manipulation unit 3 is manipulated first after the return to the normal operation mode has been determined. Thus, safety can be enhanced.

Further, it is preferable to set the restoring operation mode to be repeated several times while the manipulation unit 3 is repeatedly manipulated for a certain time period. It is because, if the manipulation unit 3 is turned on and off swiftly and repeatedly at the first manipulation of manipulation unit 3 after the determination of return to the normal operation, the operator might not notice that the operation mode is being converted to the restoring operation mode.

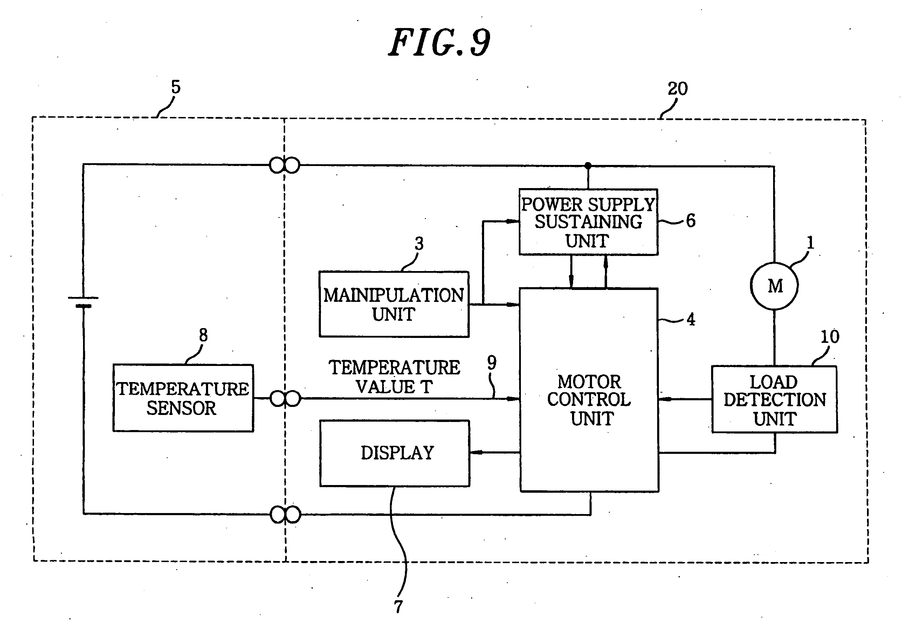

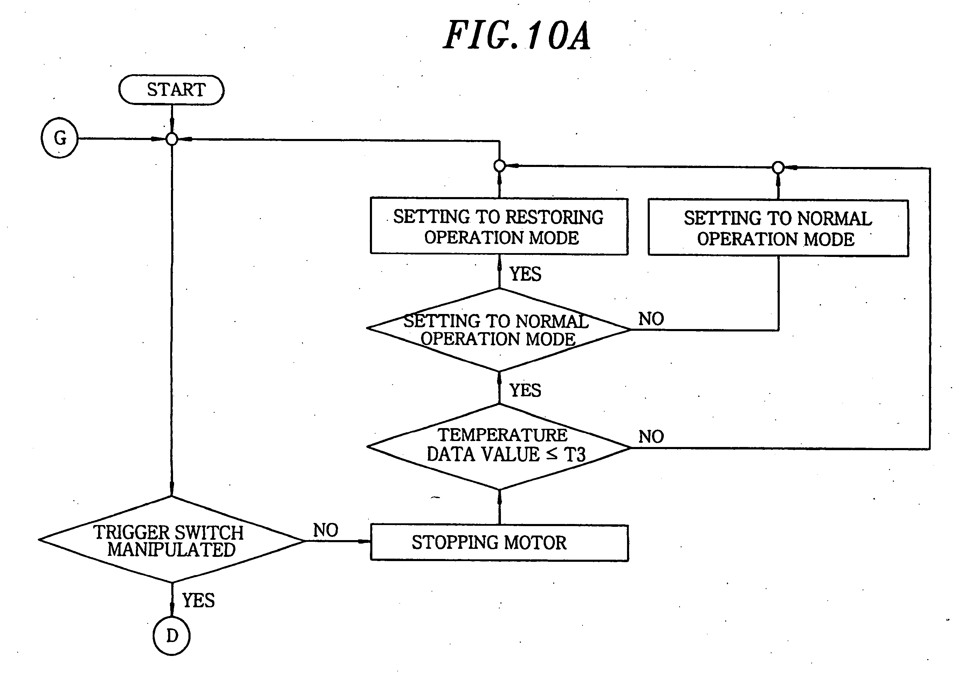

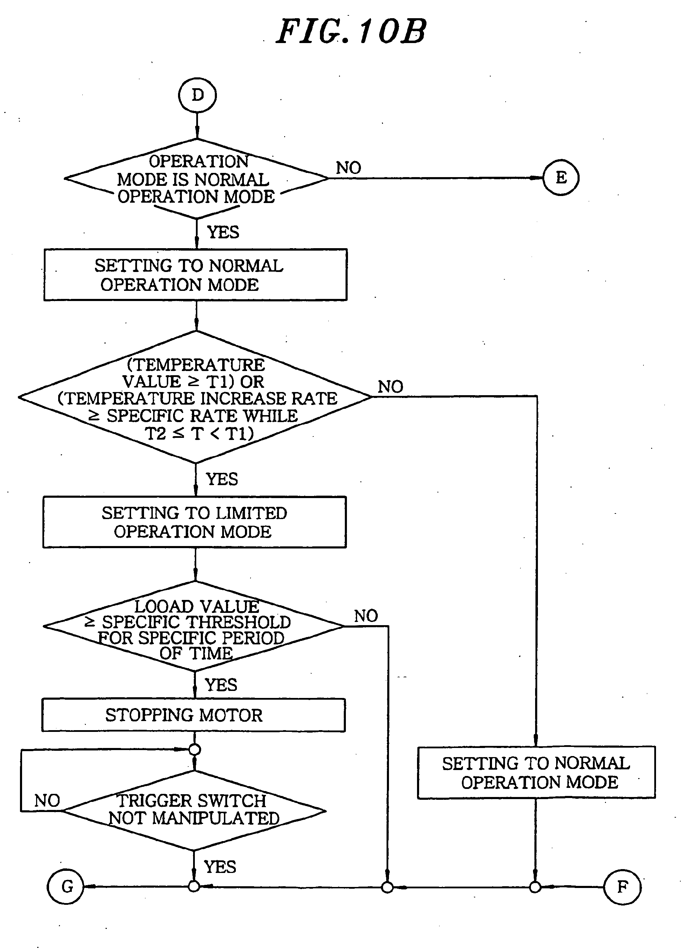

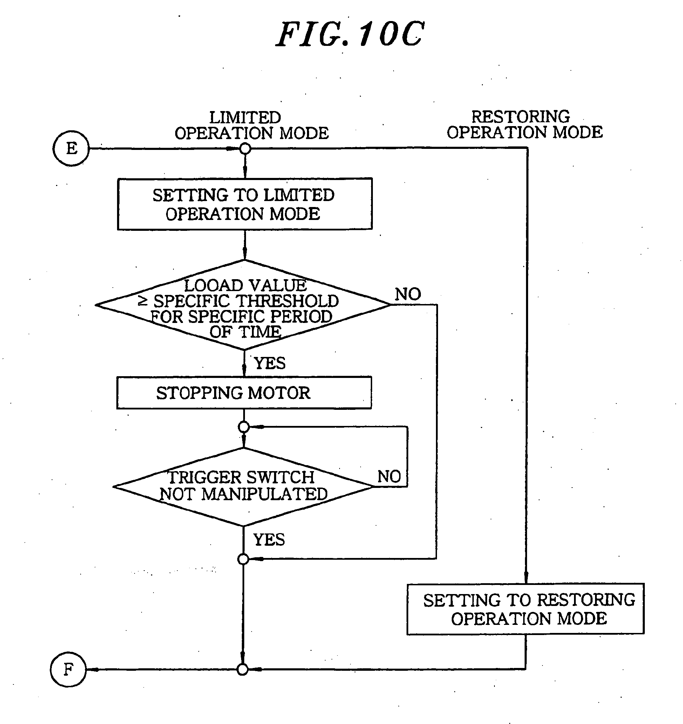

Hereinafter, an electric power tool in accordance with a third embodiment of the present invention will be explained with reference to Figs. 9 and 10. The electric power tool of the third embodiment has a configuration same as that of the first embodiment, except that a load detector 10 for detecting a load of the motor 1 is provided therein to control the motor 1 based on an output of the load detector 10. Therefore, same parts will be given same reference numerals, respectively, and descriptions thereof will be omitted; and instead, distinctive parts will be focused and elaborated.

In the present embodiment, if a load value detected by the load detector 10 while the motor 1 is operated in the limited operation mode exceeds a specific threshold, and this state is continued for a specific period of time, a motor control unit 4 determines that there has occurred an abnormality, and stops the motor 1. It is highly possible that an output shaft 15 would be locked while the electric power tool is being used, because the rotation number ω is restrained during the limited operation mode. However, in accordance with the present embodiment, temperature rises of the battery unit 5 and the motor 1 can be prevented even in such a case, because the motor 1 is stopped by the determination of abnormality.

As the load detector 10, a motor current detector may be employed for example, so that a load of the motor 1 is detected by the motor control unit 4 based on a motor current detected by the motor current detector. However, the configuration of the load detector 10 is not limited thereto, and it may be configured otherwise, e.g., by using a rotation sensor for detecting a rotation of the output shaft 15.

While the invention has been shown and described with respect to the embodiments, it will be understood by those skilled in the art that various changes and modifications may be made without departing from the scope of the invention as defined in the following claims.

## Claims

1. An electric power tool comprising:
a motor (1);
a battery unit (5) for supplying an electric power for driving the motor (1);
a driving force transmission mechanism (2) for transmitting a driving force of the motor (1);
a manipulation unit (3) for receiving input data representing a rotation number (ω) and an on/off manipulation of the motor (1) wherein the manipulation unit (3) is a trigger switch, that can be freely pushed in and out, and wherein data on the pushed amount are inputted to a motor control unit (4);
a motor control unit (4) for controlling the motor (1) based on the input data from the manipulation unit (3); and
a temperature sensor (8) for detecting a temperature of the battery unit (5) as a temperature value (T),
wherein, the temperature sensor (8) is adapted such that, if the temperature value (T) detected by the temperature sensor (8) while being operated in a normal operation mode is higher than or equal to a first abnormal temperature value (T1), the motor control unit (4) is adapted to determine that the battery unit (5) is in an abnormal state, and convert an operation mode of the motor (1) to a limited operation mode in which a rotation of the motor (1) is stopped or suppressed,
**characterized in that** the motor control unit (4) is being adapted to carry out determination of the abnormal state only while the manipulation unit (3) is being manipulated"

2. The electric power tool of claim 1, wherein, the motor control unit (4) determines that the battery unit (5) is in the abnormal state also in case the temperature value (T) detected by the temperature sensor (8) while being operated in the normal operation mode is lower than the first abnormal temperature value (T1) but higher than or equal to a second abnormal temperature value (T2), and an increase rate (ΔT/Δt) of the temperature value (T) is higher than or equal to a specific rate.

3. The electric power tool of claim 1 or 2, wherein the motor control unit (4) sets a maximum rotation number (ω max) of the motor (1) while being operated in the limited operation mode to be smaller than that of the motor (1) while being operated in the normal operation mode.

4. The electric power tool of any one of claims 1 to 3, wherein, if the temperature value (T) detected by the temperature detector (8) while being operated in the limited operation mode is equal to or smaller than a restoration temperature value (T3), the motor control unit (4) determines to return the operation to the normal operation mode, and converts the operation mode of the motor (1) to the normal operation mode.

5. The electric power tool of claim 4, wherein the motor control unit (4) carries out determination to return the operation to the normal operation mode only while the manipulation unit (3) is not being manipulated.

6. The electric power tool of claim 4 or 5, wherein, when the manipulation unit (3) is manipulated first after determination to return the operation to the normal operation mode, the motor control unit (4) executes a restoring operation mode, and converts the operation mode of the motor (1) to the normal operation mode after completing the restoring operation mode, and
wherein, in the restoring operation mode, a time period required for the rotation number of the motor (1) to reach a number corresponding to the input data of the manipulation unit (3) is set to be longer than that set in the normal operation mode.

7. The electric power tool of any one of claims 1 to 6, further comprising:
a load detector (10) for detecting a load of the motor (1),
wherein the motor control unit (4) stops the motor (1) if a load value detected by the load detector (10) while being operated in the limited operation mode exceeds a specific reference value for a specific period of time.

8. The electric power tool of any one of claims 1 to 7, further comprising:
a power supply sustaining unit (6) that serves to sustain or cut off a power supply to the motor control unit (4),
wherein, if the manipulation unit (3) is not manipulated for a specific time period, the power supply sustaining unit (6) cuts off the power supply to the motor control unit (4), the specific time period being set to be longer while being operated in the limited operation mode than that set while being operated in the normal operation mode.

9. The electric power tool of any one of claims 1 to 8, wherein, a transmission failure temperature value (T4) is set such that, when a transmission failure occurs in a data transmission line (9) connected between the temperature sensor (8) and the motor control unit (4), the temperature value (T) detected by the temperature sensor (8) is smaller than the transmission failure temperature value (T4), and
wherein, if the temperature value (T) detected by the temperature sensor (8) while being operated in the normal operation mode is equal to or smaller than the transmission failure temperature value (T4), the motor control unit (4) determines that the battery unit (5) is in the abnormal state, and converts the operation mode of the motor (1) to the limited operation mode regardless of the input data provided from the manipulation unit (3).

## Patentansprüche

1. Elektrisch betriebenes Werkzeug umfassend:
einen Motor (1);
eine Batterie-Einheit (5) zum Zuführen von elektrischem Strom zum Antreiben des Motors (1);
ein Antriebskraft-Übertragungsmechanismus (2) zum Übertragen einer Antriebskraft des Motors (1);
eine Bedienungs-Einheit (3) zum Aufnehmen von Eingabe-Daten, die eine Drehzahl (ω) und eine An/Aus-Bedienung des Motors (1) darstellen,
wobei die Bedienungs-Einheit (3) ein Abzugsschalter ist, der frei hinein und heraus gedrückt werden kann, und wobei Daten über die gedrückten Menge in eine Motor-Steuereinheit (4) eingegeben werden,
eine Motor-Steuereinheit (4) zum Steuern des Motors (1) basierend auf den Eingabedaten von der Bedienungs-Einheit (3); und
ein Temperatursensor (8) zum Erfassen einer Temperatur der Batterie-Einheit (5) als ein Temperaturwert (T),
wobei der Temperatursensor (8) derart ausgelegt ist, dass, wenn der Temperaturwert (T), der von dem Temperatursensor (8) erfasst ist, solange in einem normalen Betriebsmodus betrieben, höher ist als oder gleich zu einem ersten abnormalen Temperaturwert (T1), die Motor-Steuereinheit (4) dazu ausgelegt ist, zu bestimmen, dass die Batterie-Einheit (5) sich in einem abnormalen Zustand befindet, und um einen Betriebsmodus des Motors (1) zu einem beschränkten Betriebsmodus umzuwandeln, in dem eine Drehung des Motors (1) gestoppt oder unterdrückt ist,
**dadurch gekennzeichnet, dass** die Motor-Steuereinheit (4) dazu ausgelegt ist, um eine Bestimmung des abnormalen Zustands nur auszuführen, solange die Bedienungs-Einheit (3) bedient wird.

2. Elektrisch betriebenes Werkzeug gemäß Anspruch 1, bei dem die Motor-Steuereinheit (4) bestimmt, dass sich die Batterie-Einheit (5) in einem abnormalen Zustand befindet auch in dem Fall, dass der Temperaturwert (T), der von dem Temperatursensor (8) erfasst ist, solange in einem normalen Betriebsmodus betrieben, niedriger ist, als der erste abnormale Temperaturwert (T1), aber höher als oder gleich zu einem zweiten abnormalen Temperaturwert (T2) ist, und eine Anstiegsrate (ΔT/Δt) des Temperaturwerts (T) höher als oder gleich zu einer spezifischen Rate ist.

3. Elektrisch betriebenes Werkzeug gemäß Anspruch 1 oder 2, bei dem die Motor-Steuereinheit (4) eine maximale Drehzahl (ω max) des Motors (1) festlegt, solange in dem beschränkten Betriebsmodus betrieben, um geringer als die des Motors (1) zu sein, solange in dem normalen Betriebsmodus betrieben.

4. Elektrisch betriebenes Werkzeug gemäß einem der Ansprüche 1 bis 3, bei dem, wenn der Temperaturwert (T), der über das Temperatur-Erfassungsmittel (8) erfasst ist, solange in dem beschränkten Betriebsmodus betrieben, gleich oder geringer als ein Wiederherstell-Temperaturwert (T3) ist, die Motor-Steuereinheit (4) bestimmt, den Betrieb zu dem normalen Betriebsmodus zurückzuführen, und den Betriebsmodus des Motors (1) zu dem normalen Betriebsmodus umwandelt.

5. Elektrisch betriebenes Werkzeug gemäß Anspruch 4, bei dem die Motor-Steuereinheit (4) eine Bestimmung ausführt, den Betrieb zu dem normalen Betriebsmodus nur zurückzuführen, solange die Bedienungs-Einheit (3) nicht bedient wird.

6. Elektrisch betriebenes Werkzeug gemäß Anspruch 4 oder 5, bei dem, wenn die Bedienungs-Einheit (3) erst nach einer Bestimmung den Betrieb zu dem normalen Betriebsmodus zurückzuführen, bedient wird, die Motor-Steuereinheit (4) einen Wiederherstell-Betriebsmodus ausführt, und den Betriebsmodus des Motors (1) zu dem normalen Betriebsmodus nach einer Vervollständigung des Wiederherstellungs-Betriebsmodus umwandelt, und
bei dem in dem Wiederherstellungs-Betriebsmodus, eine Zeitperiode, die für die Drehzahl des Motors (1) erforderlich ist, um eine Drehzahl zu erreichen, die zu den Eingabedaten der Bedienungs-Einheit (3) korrespondiert, festgelegt ist, um länger zu sein, als diejenige, die in dem normalen Betriebsmodus festgelegt ist.

7. Elektrisch betriebenes Werkzeug gemäß einem der Ansprüche 1 bis 6, weiter umfassend:
einen Ladungs-Erfassungsmittel (10) zum Erfassen einer Ladung des Motors (1);
wobei die Motor-Steuereinheit (4) den Motor (1) stoppt, wenn ein Ladungswert über das Ladungserfassungsmittel (10) erfasst wird, solange in dem beschränkten Betriebsmodus betrieben, einen spezifischen Referenzwert für eine spezifische Zeitperiode überschreitet.

8. Elektrisch betriebenes Werkzeug gemäß einem der Ansprüche 1 bis 7, weiter umfassend:
eine Stromzuführ-Aufrechterhaltungseinheit (6), die dazu dient, eine Stromzufuhr zu der Motor-Steuereinheit (4) aufrecht zu erhalten oder abzuschalten,
wobei, wenn die Bedienungs-Einheit (3) nicht für eine spezifische Zeitperiode bedient wird, die Stromzufuhr-Aufrechterhaltungseinheit (6) die Stromzufuhr zu der Motor-Steuereinheit (4) abschaltet, wobei die spezifische Zeitperiode festgelegt wird, um länger zu sein, solange in dem beschränkten Betriebsmodus betrieben, als die die festgelegt ist, solange in dem normalen Betriebsmodus betrieben.

9. Elektrisch betriebenes Werkzeug gemäß einem der Ansprüche 1 bis 8, bei dem, ein Übertragungsfehler-Temperaturwert (T4) derart festgelegt ist, dass wenn ein Übertragungsfehler in der Datenübertragungs-Leitung (9) auftritt, die zwischen dem Temperatursensor (8) und der Motor-Steuereinheit (4) verbunden ist, der Temperaturwert (T), der über den Temperatursensor (8) erfasst ist, geringer ist als der Übertragungsfehler-Temperaturwert (T4), und
wobei, wenn der Temperaturwert (T), der über den Temperatursensor (8) erfasst ist, solange in dem normalen Betriebsmodus betrieben, gleich oder geringer ist als der Übertragungsfehler-Temperaturwert (T4), die Motor-Steuereinheit (4) bestimmt, dass die Batterie-Einheit (5) sich in dem abnormalen Zustand befindet, und den Betriebsmodus des Motors (1) zu dem beschränkten Betriebsmodus umwandelt, unabhängig von den Eingabedaten, die über die Bedienungs-Einheit (3) bereitgestellt sind.

## Revendications

1. Outil électrique portatif comprenant :
- un moteur (1) ;
- une unité de batterie (5) pour délivrer une énergie électrique pour actionner le moteur (1) ;
- un mécanisme de transmission de force motrice (2) pour transmettre une force motrice du moteur (1) ;
- une unité de manipulation (3) pour recevoir des données d'entrée représentant un nombre de rotations (ω) et une manipulation marche/ arrêt du moteur (1), dans laquelle l'unité de manipulation (3) est un interrupteur à gâchette, qui peut être librement enfoncé et relâché, et dans lequel des données sur la quantité d'enfoncement sont entrées dans une unité de commande de moteur (4) ;
- une unité de commande de moteur (4) pour commander le moteur (1) sur la base des données d'entrée provenant de l'unité de manipulation (3) ; et
- un capteur de température (8) pour détecter une température de l'unité de batterie (5) comme une valeur de température (T),
dans laquelle le capteur de température (8) est adapté de sorte que, si la valeur de température (T) détectée par le capteur de température (8) durant le fonctionnement dans un mode de fonctionnement normal est supérieure ou égale à une première valeur de température anormale (T1), l'unité de commande de moteur (4) soit adaptée pour déterminer que l'unité de batterie (5) est dans un état anormal et convertir un mode de fonctionnement du moteur (1) en un mode de fonctionnement limité dans lequel une rotation du moteur (1) est interrompue ou supprimée,
**caractérisé en ce que** l'unité de commande de moteur (4) est adaptée pour exécuter une détermination de l'état anormal seulement alors que l'unité de manipulation (3) est manipulée.

2. Outil électrique portatif selon la revendication 1, dans lequel l'unité de commande de moteur (4) détermine que l'unité de batterie (5) est dans un état anormal également dans le cas où la valeur de température (T) détectée par le capteur de température (8) durant le fonctionnement dans le mode de fonctionnement normal est inférieure à la première valeur de température anormale (T1) mais supérieure ou égale à une deuxième valeur de température anormale (T2) et un taux d'augmentation (ΔT/Δt) de la valeur de température (T) est supérieur ou égal à un taux spécifique.

3. Outil électrique portatif selon la revendication 1 ou 2, dans lequel l'unité de commande de moteur (4) fixe un nombre de rotation maximum (ω max) du moteur (1) durant le fonctionnement dans le mode de fonctionnement limité qui soit plus petit que celui du moteur (1) durant le fonctionnement dans le mode de fonctionnement normal.

4. Outil électrique portatif selon l'une quelconque des revendications 1 à 3, dans lequel, si la valeur de température (T) détectée par le capteur de température (8) durant le fonctionnement dans le mode de fonctionnement limité est égale ou inférieure à une valeur de température de rétablissement (T3), l'unité de commande de moteur (4) détermine le retour du fonctionnement dans le mode de fonctionnement normal et convertit le mode de fonctionnement du moteur (1) dans le mode de fonctionnement normal.

5. Outil électrique portatif selon la revendication 4, dans lequel l'unité de commande de moteur (4) exécute la détermination du retour du fonctionnement dans le mode de fonctionnement normal seulement quand l'unité de manipulation (3) n'est pas manipulée.

6. Outil électrique portatif selon la revendication 4 ou 5, dans lequel, quand l'unité de manipulation (3) est manipulée pour la première fois après détermination du retour du fonctionnement dans le mode de fonctionnement normal, l'unité de commande de moteur (4) exécute un mode de fonctionnement de rétablissement et convertit le mode de fonctionnement du moteur (1) dans le mode de fonctionnement normal après achèvement du mode de fonctionnement de rétablissement, et dans lequel, dans le mode de fonctionnement de rétablissement, une période de temps nécessaire pour que le nombre de rotation du moteur (1) atteigne un nombre correspondant aux données d'entrée de l'unité de manipulation (3) est fixée pour être plus longue que celle fixée dans le mode de fonctionnement normal.

7. Outil électrique portatif selon l'une quelconque des revendications 1 à 6, comprenant en outre :
un détecteur de charge (10) pour détecter une charge du moteur (1),
dans laquelle l'unité de commande de moteur (4) arrête le moteur (1) si une valeur de charge détectée par le détecteur de charge (10) durant le fonctionnement dans le mode de fonctionnement limité dépasse une valeur de référence spécifique pendant une période de temps spécifique.

8. Outil électrique portatif selon l'une quelconque des revendications 1 à 7, comprenant en outré :
une unité de soutien d'alimentation électrique (6) qui sert à soutenir ou couper une alimentation électrique vers l'unité de commande de moteur (4),
dans laquelle, si l'unité de manipulation (3) n'est pas manipulée pendant une période de temps spécifique, l'unité de soutien d'alimentation électrique (6) coupe l'alimentation électrique vers l'unité de commande de moteur (4), la période de temps spécifique étant fixée pour être plus longue durant le fonctionnement dans le mode de fonctionnement limité que celle fixée dans le mode de fonctionnement normal.

9. Outil électrique portatif selon l'une quelconque des revendications 1 à 8, dans lequel, une valeur de température de défaillance de transmission (T4) est fixée de manière que, quand une défaillance de transmission se produit dans une ligne de transmission de données (9) connectée entre le capteur de température (8) et l'unité de commande de moteur (4), la valeur de température (T) détectée par le capteur de température (8) est plus petite que la valeur de température de défaillance de transmission (T4), et
dans laquelle, si la valeur de température (T) détectée par le capteur de température (8) durant le fonctionnement dans le mode de fonctionnement normal est égale ou inférieure à la valeur de température de défaillance de transmission (T4), l'unité de commande de moteur (4) détermine que l'unité de batterie (5) est dans l'état anormal et convertit le mode de fonctionnement du moteur (1) au mode de fonctionnement limité indépendamment des données d'entrée délivrée à partir de l'unité de manipulation (3).
